# EUROPÄISCHE PATENTSCHRIFT

(11) **EP 1 954 542 B1**
(45) Veröffentlichungstag und Bekanntmachung des Hinweises auf die Patenterteilung: **28.07.2010**
(21) Anmeldenummer: 06828575.8
(22) Anmeldetag: 29.11.2006
(51) Int. Cl.: B60W 10/10, B60W 20/00

(54) **HYBRIDANTRIEB FÜR FAHRZEUGE SOWIE VERFAHREN ZUR STEUERUNG EINES GETRIEBES FÜR EINEN HYBRIDANTRIEB**
HYBRID DRIVE FOR VEHICLES AND METHOD FOR CONTROLLING A TRANSMISSION FOR A HYBRID DRIVE
SYSTEME HYBRIDE DE PROPULSION, ET PROCEDE POUR COMMANDER UNE BOITE DE VITESSES POUR UN SYSTEME HYBRIDE DE PROPULSION

(30) Priorität: 02.12.2005 DE 102005057607
(43) Veröffentlichungstag der Anmeldung: 13.08.2008
(73) Patentinhaber: Hytrac GmbH, 45139 Essen (DE)
(72) Erfinder: TOLKSDORF, Detlef, 45141 Essen (DE)
(74) Vertreter: Döpp, Ludger
(86) Internationale Anmeldenummer: PCT/DE2006/002114
(87) Internationale Veröffentlichungsnummer: WO 2007/062630

(56) Entgegenhaltungen:
- EP-A- 0 925 981
- EP-A- 1 247 679
- EP-A- 1 524 145
- DE-A1- 19 818 108
- DE-A1-102005 022 011
- US-A1- 2006 046 886

## Beschreibung

Die Erfindung betrifft einen Hybridantrieb für Fahrzeuge.

Im Bereich Technik und Wirtschaft der VDI-Nachrichten von 21. Januar 2005, Nr. 3, wurde ein Bericht veröffentlicht, der sich mit Mischantrieben (Hybridantriebe) aus Verbrennungs- und Elektromotoren für den Automobilbau auseinandersetzt. Beschrieben wird ein Mischantrieb aus Benzin- und Elektromotor. Die Motorleistung wird im Normalbetrieb verzweigt. Ein Teil der Leistung fließt direkt über ein Planetengetriebe und der andere Leistungsteil fließt über einen Generator und Elektromotor, wobei eine wiederaufladbare Batterie gespeist wird. Die jeweilige Leistungsverzweigung orientiert sich am höchsten erzielbaren Wirkungsgrad des Gesamtsystems.

Einem im Internet veröffentlichten Bericht der TU Chemnitz ist ein stufenloses Fahrzeuggetriebe mit elektromechanischer Leistungsverzweigung (SEL) zu entnehmen, das sich eingangs mit dem vorab beschriebenen Mischantrieb auseinandersetzt. Als gravierender Nachteil des vorab angesprochenen Getriebes wird angesehen, dass das Abtriebsdrehmoment nie größer werden kann als die Summe der Drehmomente von Hohlrad und Elektromotor an der Abtriebsseite. Das Hohlraddrehmoment ist bei diesem Konzept immer kleiner als das schon geringe Stegdrehmoment bzw. Drehmoment des Verbrennungsmotors von max. 150 Nm. Für hohe Beschleunigungen und hohe Steigfähigkeit benötigt selbst ein leichtes Fahrzeug Abtriebsmomente von 600 Nm und mehr. Mit dem eingangs angesprochenen Antriebskonzept erfordert das eine sehr große Antriebsmaschine.

Mit dem ebenfalls in dem Beitrag der TU Chemnitz beschriebenen SEL-Konzept soll das vorgeschlagene Erstprinzip beibehalten, die Nachteile jedoch beseitig werden. Ergänzend wird vorgeschlagen, dass zum Aufbau hoher Abtriebsdrehmomente das Hohlraddrehmoment der Welle in einer weiteren Planetengetriebestufe mit hoher Übersetzung zum Abtrieb übertragen wird. Damit sollen dann beide Planetenradstufen in Summe eine hohe Übersetzung bewirken, wobei Antriebsdrehmomente über 1000 Nm erzeugt werden können.

Auch wenn hier bereits eine positive Weiterentwicklung bezüglich der Abtriebsdrehmomente herbeigeführt werden kann, ist jedoch auch hier nachteilig, dass eine zweite Planetenstufe eingesetzt werden muss, die das Getriebe verteuert.

Das Dokument DE 19818108 wird als nächstliegender Stand der Technik angesehen und zeigt die Merkmale der Präambel des unabhängigen Anspruchs 1.

Ziel des Erfindungsgegenstandes ist es, den Stand der Technik dahingehend weiterzubilden, dass bei Einsatz eines einzelnen Planetengetriebes, respektive einer einzelnen Planetengetriebestufe, in Wirkverbindung mit einem relativ kleinen Elektromotor und außerdem mit deutlich reduziertem Schaltaufwand dennoch der maximalen Leistungsfähigkeit in den jeweiligen Geschwindigkeitsbereichen des Fahrzeuges Rechnung getragen werden kann.

Dieses Ziel wird erreicht durch einen Hybridantrieb für Fahrzeuge, zumindest beinhaltend einen Hauptmotor, insbesondere eine Brennkraftmaschine, einen Generator, einen Elektromotor und ein, ein Sonnenrad, ein Hohlrad, einen Planetenträger sowie Planetenräder aufweisendes Planetengetriebe, das mindestens eine Abtriebswelle beinhaltet, wobei für einen ersten Fahrbereich des Fahrzeuges zur Addition der Drehmomente die Antriebswellen des Hauptmotors und des Elektromotors auf das Sonnenrad des Planetengetriebes gekoppelt sind und für einen weiteren Fahrbereich einer der beiden Motoren zur mechanischen Addition der Drehzahlen entsprechend dem Überlagerungsprinzip kraftschlüssig auf das Hohlrad des Planetengetriebes koppelbar ist.

Vorteilhafte Weiterbildungen des Erfindungsgegenstandes sind den zugehörigen gegenständlichen Unteransprüchen zu entnehmen.

Dieses Ziel wird auch erreicht durch ein Verfahren zur Steuerung eines Getriebes für einen Hybridantrieb, beinhaltend mindestens zwei Motoren, die über eine Kupplung miteinander verbunden sind und mindestens ein, mindestens eine Abtriebswelle aufweisendes Planetengetriebe, dessen Hohlrad über mindestens eine Bremse festsetzbar ist, indem die Motoren in einem ersten Fahrbereich Drehmoment addierend zusammengeschaltet werden und einer der Motoren dergestalt über mindestens eine weitere Kupplung umgeschaltet wird, dass die Motoren in einem weiterer Fahrbereich Drehzahl addierend betrieben werden.

Vorteilhafte Weiterbildungen des Erfindungsgegentandes sind den zugehörigen verfahrensgemäßen Unteransprüchen zu entnehmen.

In Weiterbildung des Standes der Technik kommt somit lediglich ein einzelnes Planetengetriebe, respektive eine einzelne Planetengetriebestufe, in Wirkverbindung mit einem leistungsmäßig gering dimensionierten Elektromotor zum Einsatz.

Bedarfsweise kann der erfindungsgemäße Hybridantrieb mit einem herkömmlichen in Automatikgetrieben üblichen hydrodynamischen Wandler mit Überbrückungskupplung ausgerüstet werden, so dass einerseits ein gutes Leerlaufverhalten gegeben ist und andererseits ein stoßarmer Schaltvorgang vom unteren (ersten) in den oberen (weiteren) Geschwindigkeitsbereich und umgekehrt herbeiführbar ist.

Beim Erfindungsgegenstand kann der als Verbrennungsmotor ausgebildete Hauptmotor über eine Steuerung stets im optimalen Drehzahlbereich gehalten werden kann. Neben den bereits bekannten positiven Einflussgrößen eines Hybridantriebes kann somit weiterhin Kraftstoff eingespart werden.

Der erfindungsgemäße Hybridantrieb kann in allen Fahrzeugen eingesetzt werden. Dies betrifft unter anderem PKW, LKW, Busse, Nutzfahrzeuge, Spezialfahrzeuge, Agrarmaschinen oder dergleichen. Bei entsprechender Anpassung der Leistungsparameter von Verbrennungskraftmaschine und Elektromotor besteht ebenfalls die Möglichkeit diesen Hybridantrieb in Schiffen (Sport- und Frachtschiffen) einzusetzen.

Der Erfindungsgegenstand ist anhand eines Ausführungsbeispieles in der Zeichnung dargestellt und wird wie folgt beschrieben. Es zeigen
- Figur 1: Prinzipskizze des Antriebsschemas für einen Fahrzeughybridantrieb, der in einem ersten Fahrbereich geringer Geschwindigkeit bewegbar ist;
- Figur 2: Prinzipskizze des Antriebsschemas für einen Fahrzeughybridantrieb, der in einem zweiten Fahrbereich höherer Geschwindigkeit bewegbar ist;
- Figur 3: Prinzipskizze des Antriebsschemas für einen Fahrzeughybridantrieb, der bei Aufladung eines Speichers durch einen Generator über eine Verbrennungskraftmaschine nur mit dem Elektromotor angetrieben wird;
- Figur 4: Prinzipskizze des Antriebsschemas für einen Fahrzeughybridantrieb, der nur mit dem Elektromotor angetrieben wird, und zwar bei abgeschaltetem Verbrennungsmotor im Batteriebetrieb.
- Tabelle 1: Gegenüberstellung der Leistungsdaten eines konventionellen 4- Gang-Antriebes und des erfindungsgemäßen Hybridantriebes.

Die verschiedenen Figuren zeigen unterschiedliche Betriebszustände eines Hybridantriebes für ein Fahrzeug, beispielsweise einen PKW, wobei lediglich die Funktion, nicht jedoch der konkrete konstruktive Aufbau des Hybridantriebes, beschrieben wird.

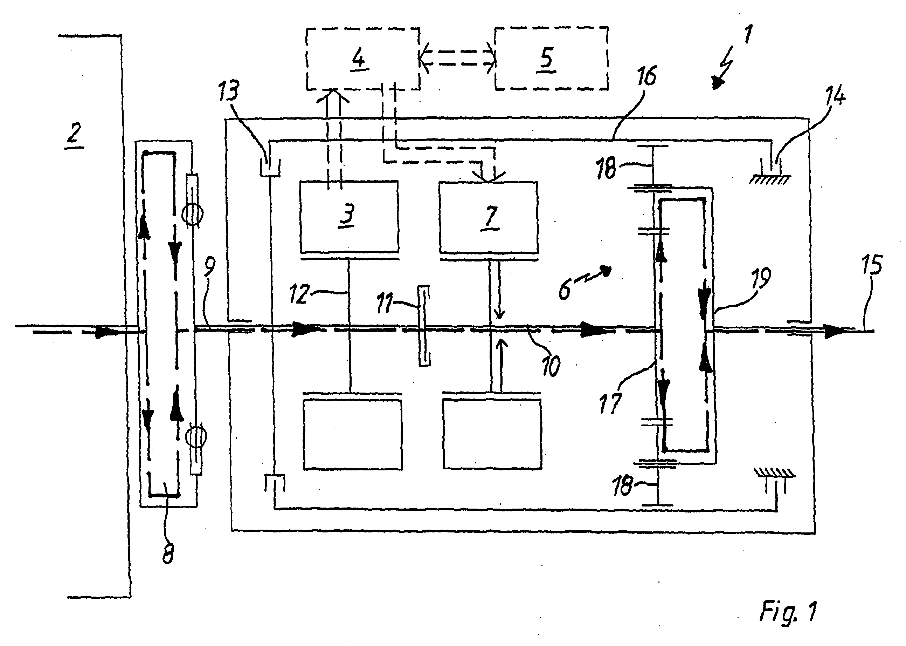

Figur 1 zeigt als Prinzipskizze das Antriebsschema für den erfindungsgemäßen Hybridantrieb 1. Folgende wesentliche Komponenten sind dargestellt:
eine als Hauptmotor 2 ausgebildete Verbrennungskraftmaschine, beispielsweise ein Otto, -Diesel- oder Erdgasmotor, ein elektrischer Generator 3, eine Steuerung 4, ein Speicher 5, ein Planetengetriebe 6 (Lastschaltgetriebe), ein Elektromotor 7 sowie ein hydrodynamischer Wandler 8. Der üblicherweise bei derartigen Hybridantrieben zum Einsatz gelangende hydrodynamische Wandler 9 stellt sicher; dass im Leerlaufzustand des Fahrzeuges keine Antriebsenergie auf die Räder des Fahrzeuges übertragen werden kann. Er bildet sozusagen eine weitere Kupplung. Der Hauptmotor 2 wirkt auf eine eingangsseitige Antriebswelle 9 ein, während der Elektromotor 7 eine eingangsseitige Antriebswelle 10 antreibt. Die Antriebswellen 9 und 10 sind über eine Kupplung 11 miteinander wirktechnisch verbindbar. Ein Zahnrad 12 treibt den Generator 3 an. Weitere Bauteile des Hybridantriebes 1 werden gebildet durch eine weitere Kupplung 13, eine Bremse 14 und eine gemeinsame Abtriebswelle 15 am Ausgang des Planetengetriebes 6. Des Weiteren sind innerhalb des Planetengetriebes 6 ein Hohlrad 16, ein Sonnenrad 17 sowie Planetenräder 18 und ein Planetenträger 19 (Steg) angeordnet.

Das in Figur 1 dargestellte Antriebsschema zeigt den Leitungsfluss im ersten Fahrbereich eines Fahrzeuges, in diesem Beispiel eines PKW. Der Leistungsfluss in diesem Fahrbereich ist durch die eingefügten Pfeile erkennbar. Der Hauptmotor 2 treibt hierbei über seine Antriebswelle 9 unmittelbar das Sonnenrad 17 des Planetengetriebes 6 an. Über die Planetenräder 18 wird das Drehmoment des Hauptmotors 2 auf den Planetenträger 19 des Planetengetriebes 6 und somit auf die damit verbundene, in diesem Beispiel einzige, Abtriebswelle 15 übertragen. Der Elektromotor 7 treibt über seine Antriebswelle 10 ebenfalls das Sonnenrad 17 an. Die Kupplung 11 ist in diesem Fahrbereich geschlossen. Die Drehmomente der beiden Motoren 2,7 werden somit im Bereich der Antriebswellen 9,10 addiert und wie dargestellt über Sonnenrad 17, Planeten 18 und Planetenträger 19 auf die Abtriebswelle 15 des Planetengetriebes 6 übertragen. Das Hohlrad 16 ist in diesem Fahrbereich über die Bremse 14 festgesetzt und die Kupplung 13 ist geöffnet, das heißt, sie ist inaktiv. In diesem unteren Fahrbereich können, basierend auf der vorliegenden Antriebsregelung, beispielsweise Fahrgeschwindigkeiten bis zu 50 km/h realisiert werden.

Für einen rein elektrischen Fahrantrieb in diesem Gang kann beispielsweise der Hauptmotor 2 abgeschaltet und die Kupplung 11 geöffnet werden. Der Leistungsfluss ist ansonsten identisch mit Figur 1, nämlich, dass der Elektromotor 7 seine Leistung über seine Antriebswelle 10 sowie das Planetengetriebe 6 auf die Abtriebswelle 15 überträgt.

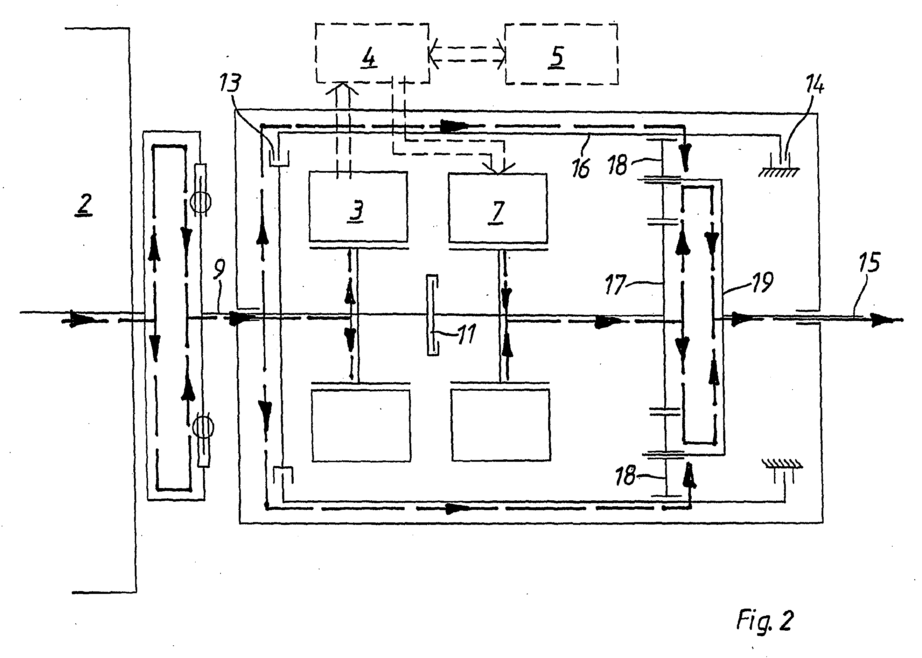

Figur 2 zeigt das gleiche Antriebsschema, wie es in Figur 1 dargestellt ist, so dass gleiche Bezugszeichen gelten. Hier soll jetzt der zweite Fahrbereich des nicht weiter dargestellten Fahrzeuges erläutert werden. Analog zu Figur 1 ist auch in Figur 2 der Leistungsfluss für diesen zweiten Fahrbereich mit Pfeilen markiert. Die Drehzahl des Hauptmotors 2 wird von der Antriebswelle 9 über die nun geschlossene Kupplung 13 bei geöffneter Bremse 14 unmittelbar über das Hohlrad 16 und die Planetenräder 18 auf den Planetenträger 19 und somit auf die Abtriebswelle 15 übertragen. Die Drehzahl des Elektromotors 7 wird, da die Kupplung 11 nun geöffnet ist, über das Sonnenrad 17 auf das Hohlrad 16 übertragen und somit der Drehzahl des Hauptmotors 2 in Drehzahl addierender Weise überlagert. Über die Planetenräder 18 werden die Drehzahlen der Motoren 2 und 7 auf den Planetenträger 19 und somit auf die Abtriebswelle 15 übertragen. In dieser Darstellung treibt der Hauptmotor 2 den Generator 3 an, so dass über die Steuerung 4 der Speicher 5 aufgeladen werden kann. Dieser zweite Fahrbereich ist ohne weitere Schaltvorgänge für Fahrzeug-Geschwindigkeiten oberhalb von 50 km/h, bis hin zur Endgeschwindigkeit des Fahrzeuges einsetzbar.

Es wird somit ein Hybridantrieb 1 für ein Fahrzeug bereitgestellt, welcher in diesem Beispiel in einem ersten unteren Fahrbereich von beiden Motoren 2,7 angetrieben wird, wobei die von den Motoren 2,7 abgegebenen Drehmomente über die Antriebswellen 9,10 sowie die geschlossene Kupplung 11 zu einem Gesamtdrehmoment addiert werden. Das gesamte Drehmoment wird über das Planetengetriebe 6 auf die Abtriebswelle 15 geleitet. Im zweiten oberen Fahrbereich wird der Elektromotor 7 nicht ab- sondern umgeschaltet, indem die Kupplung 11 geöffnet, die Kupplung 13 geschlossen sowie die Bremse 14 gelöst wird. In dieser Phase wirkt das System als Überlagerungsgetriebe. Die vom Elektromotor 7 eingeleitete Drehzahl wird über das Sonnenrad 17 auf das Hohlrad 16 des Planetengetriebes 6 geleitet und der über das Hohlrad 16 eingeleiteten Drehzahl des Hauptmotors 2 überlagert bzw. mechanisch aufaddiert, wodurch sich eine hohe Ausgangsdrehzahl an der Abtriebswelle 15 einstellt und demzufolge eine hohe Fahrgeschwindigkeit im oberen Fahrbereich gegeben ist

Der Vorteil gegenüber dem Stand der Technik ist darin zu sehen, dass mit zwei Motoren 2,7 und einer einzelnen Planetenstufe 6 zwei Fahrbereiche realisiert werden können, indem im ersten Fahrbereich beide Drehmomente additiv das Gesamtdrehmoment erhöhen bzw. die Zugkraft des nicht weiter dargstellten Fahrzeuges steigern und im weiteren Fahrbereich beide Drehzahlen die Gesamtdrehzahl bzw. die Geschwindigkeit des Fahrzeuges additiv erhöhen.

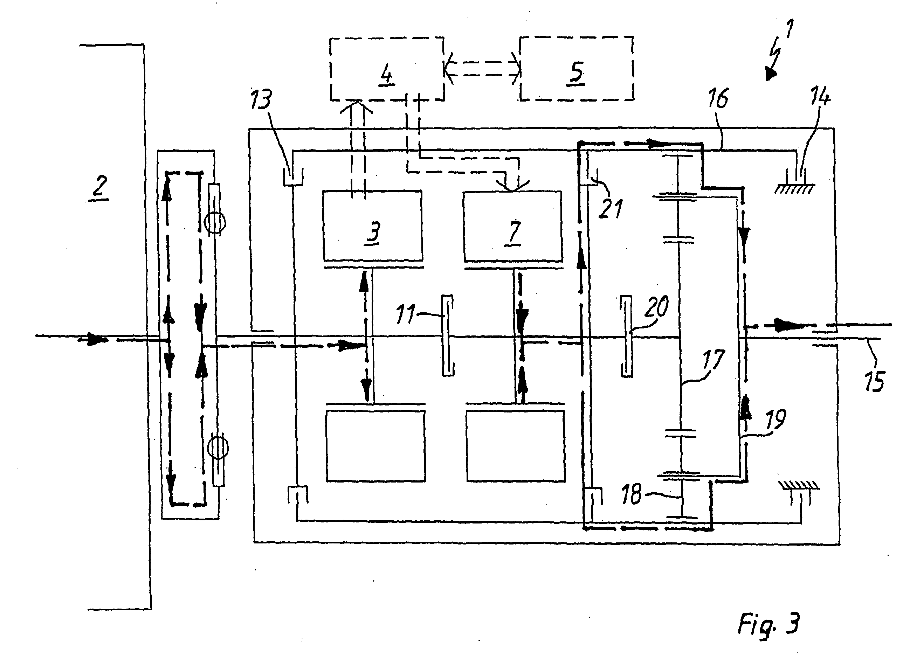

Figur 3 zeigt das gleiche Antriebsschema, wie es in den Figuren 1 und 2 dargestellt ist, so dass auch hier für gleiche Bauteile gleiche Bezugszeichen gelten. Dargestellt ist der rein elektrische Fahrbetrieb des Hybridantriebes 1. In diesem Betriebszustand ist die Kupplung 11 geöffnet. Die Kupplung 13 ist geschlossen und die Bremse 14 ist geöffnet. Der Hauptmotor 2 treibt den Generator 3 an, der den Speicher 5 über die Steuerung 4 auflädt. Es sind für diese Ausführungsform weitere Kupplungen 20,21 vorgesehen. In diesem Betriebszustand ist die Kupplung 20 geöffnet, das Sonnenrad 17 festgesetzt und die Kupplung 21 geschlossen. Die Drehzahl des Elektromotors 7 wird somit unmittelbar auf das Hohlrad 16 aufgegeben und von dort über die Planeten 18 auf den Planetenträger 19 und die Abtriebswelle 15 übertragen. Dieser Betriebszustand würde in etwa dem oberen Fahrbereich entsprechen.

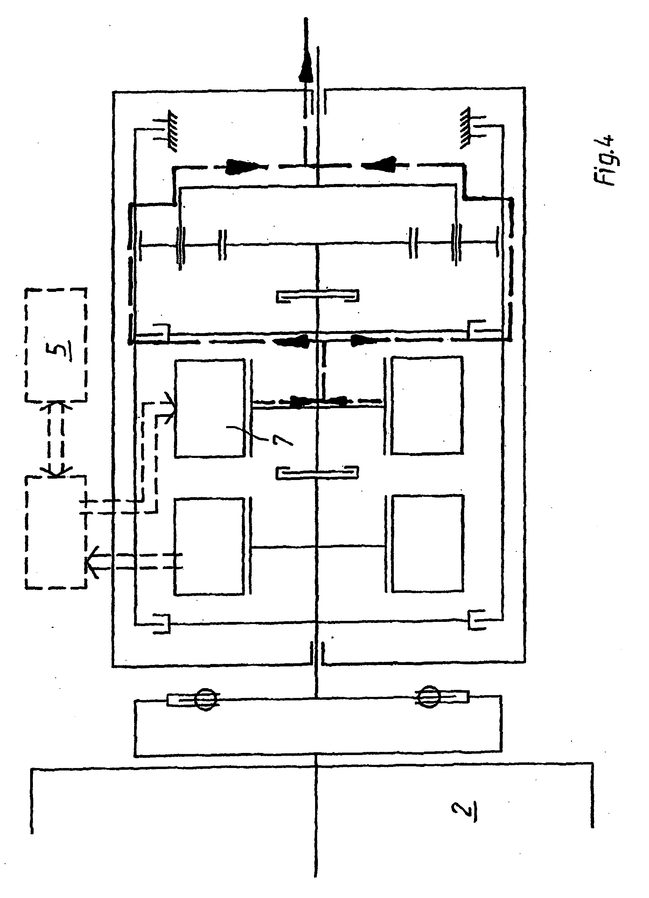

Figur 4 entspricht im Wesentlichen derjenigen der Figur 3 mit der Ausnahme, dass der Hauptmotor 2 nicht in Betrieb ist und die Antriebsleistung ausschließlich durch den Elektromotor 7 aufgebracht wird, der über den Speicher 5 mit elektrischer Leistung versorgt wird. Der Leistungsfluss entspricht demjenigen der Figur 3.

Tabelle 1 zeigt in gegenüberstellender Weise die Leistungsdaten eines konventionellen 4-Gang-Antriebes sowie des erfindungsgemäßen Hybridantriebes. Gegenüber dem herkömmlichen 4-Gang-Antrieb ist bei dem erfindungsgemäßen Hybridantrieb lediglich ein einzelner Schaltvorgang notwendig. Unter Einbeziehung eines Elektromotors geringer Leistung können mit geringem Bauaufwand im Wesentlichen gleiche Maximalgeschwindigkeiten und Maximalkräfte, beispielsweise für einen PKW, realisiert werden. Dies erfolgt durch Ausnutzung der Hybridantriebe kennzeichnenden vorteilhaften Regelbarkeit im Hinblick auf wirkungsgradoptimiertes Fahren bzw. der Reduzierung des Kraftstoffbedarfes.

### Bezugszeichen

- 1.: Hybridantrieb
- 2.: Fahrantriebs-Hauptmotor
- 3.: Generator
- 4.: Steuerung
- 5.: Speicher
- 6.: Planetengetriebe
- 7.: Elektromotor
- 8.: Hydrodynamischer Wandler (mit Überbrückungskupptung)
- 9.: Antriebswelle Hauptmotor
- 10.: Antriebswelle Elektromotor
- 11: Kupplung
- 12.: Zahnrad
- 13.: Kupplung
- 14.: Bremse
- 15.: Abtriebswelle
- 16.: Hohlrad
- 17.: Sonnenrad
- 18.: Planetenräder
- 19.: Planetenträger (Steg)
- 20.: weitere Kupplung
- 21.: weitere Kupplung

**Tabelle 1**

| **Konventioneller 4-GangAntrieb im Betrieb 1.Gang** | | | **Hybrid-Antrieb Im unteren Fahrbereich (1.Gang)** | |
|---|---|---|---|---|
| Leistung Verbrennungsmotor N [kW] | 85 | | Leistung Verbrennungsmotor N [kW] | 50 |
| max. Abtriebsdrehzahl n [U/min] | 5.500 | | max. Abtriebsdrehzahl n [U/min] | 5.500 |
| Drehmoment bei nmax Md [Nm] | 128 | | Drehmoment bei nmax Md [Nm] | 80 |
| max. Abtriebsdrehmoment Md [Nm] | 160 | | max. Abtriebsdrehmoment Md [Nm] | 100 |
| | | | | |
| | | | Leistung Elektromotor N [kW] | 35 |
| | | | max. Abtriebsdrehzahl n [U/min] | 6.000 |
| | | | max. Abtriebsdrehmoment Md [Nm] | 54 |
| | | | | |
| Getriebeübersetzung im 1. Gang | 4,00 | | Getriebeübersetzung im 1. Gang | 3,85 |
| max Getriebeausgangsdrehz, im 1. Gang | 1.375 | | max Getriebeausgangsdrehz, im 1. Gang | 1.429 |
| max Getriebeausgangsdrehm. im 1. Gang | 461 | | max Getriebeausgangsdrehm. im 1. Gang | 464 |
| Getriebewirkungsgrad | 0,90 | | Gefriebewirkungsgrad | 0,90 |
| | | | | |
| Achsübersetzung | 3,50 | | Achsübersetzung | 3,50 |
| Achsenwirkungsgrad | 0,90 | | Achsenwirkungsgrad | 0,90 |
| Radradius [m] | 0,30 | | Radradius [m] | 0,30 |
| | | | | |
| max. Fahrzeuggeschw. (1.Gang) [km/h] | 44 | | max. Fahrzeuggeschw. (1.Gang) [km/h] | 46 |
| max. Fahrzeugzugkraft (1.Gang) [N] | 4.838 | | max. Fahrzeugzugkraft (1.Gang) [N] | 4.875 |
| | | | | |

| **Konventioneller 4-Gang-Antrieb im Betrieb 4.Gang** | | | **Hybrid-Antrieb im oberen Fahrbereich (2.Gang)** | |
|---|---|---|---|---|
| Leistung VerbrennungsmotorN [kW] | 85 | | Leistung Verbrennungsmotor N [kW] | 50 |
| max. Abtriebsdrehzahl n [U/min] | 5.500 | | max. Abtriebsdrehzahl n [U/min] | 5.500 |
| Drehmoment bei nmax Md [Nm] | 128 | | Drehmoment bei nmax Md [Nm] | 80 |
| max. Abtriebsdrehmoment Md [Nm] | 160 | | max. Abtriebsdrehmoment Md [Nm] | 100 |
| | | | | |
| | | | Leistung Elektromotor N [kW] | 35 |
| | | | max. Abtriebsdrehzahl n [U/min] | 6.000 |
| | | | max. Abtriebsdrehmoment Md [Nm] | 54 |
| | | | | |
| Getriebeübersetzung im 4. Gang | 1,00 | | Getriebeübersetzung im 2. Gang | 1,39 |
| max Getriebeausgangsdrehz. im 4.Gang | 5.500 | | max Getriebeausgangsdrehz. im 2.Gang | 5.515 |
| Getriebewirkungsgrad | 0,90 | | Getriebewirkungsgrad | 0,90 |
| | | | | |
| Achsübersetzung | 3,50 | | Achsübersetzung | 3,50 |
| Achsenwirkungsgrad | 0,90 | | Achsenwirkungsgrad | 0,90 |
| Radradius [m] | 0,30 | | Radradius [m] | 0,30 |
| | | | | |
| max. Fahrzeuggeschw. (4.Gang) [km/h] | 178 | | max. Fahrzeuggeschw. (2.Gang) [km/h] | 178 |

| | | | | |
|---|---|---|---|---|
| Im 2-Gang-Betrieb ist der E-Motor an das Sonnenrad und der Verbrennungsmotor ans Hohlrad gekoppelt Planetengetriebe mit Hohlrad-Zähnezahl Z1 = 33 und Sonnenrad-Zähnezahl Z2 = 13 i1= 3,85 und i2= 1,39 | | | | |

## Patentansprüche

1. Hybridantrieb für Fahrzeuge, zumindest beinhaltend einen Hauptmotor (2), insbesondere eine Brennkraftmaschine, einen Generator (3), einen Elektromotor (7) und ein, ein Sonnenrad (17), ein Hohlrad (16), einen Planetenträger (19) sowie Planetenräder (18) aufweisendes Planetengetriebe (6), das mindestens eine Abtriebswelle (15) beinhaltet, wobei für einen ersten Fahrbereich des Fahrzeuges zur Addition der Drehmomente die Antriebswellen (9,10) des Hauptmotors (2) und des Elektromotors (7) auf das Sonnenrad (17) des Planetengetriebes (6) gekoppelt sind und für einen weiteren Fahrbereich einer der beiden Motoren (2,7) zur mechanischen Addition der Drehzahlen entsprechend dem Überlagerungsprinzip kraftschlüssig auf das Hohlrad (16) des Planetengetriebes (6) koppelbar ist, wobei das Hohlrad (16) des Planetengetriebes (6) für den ersten Fahrbereich über mindestens eine Bremse (14) festsetzbar ist.

2. Hybridantrieb nach Anspruch 1, **dadurch gekennzeichnet, dass** im zeitlichen Verlauf des Schaltvorganges mindestens einer weiteren Kupplung (13,20,21) zur Generierung eines weiteren Fahrbereiches die Bremse (14) gelöst wird.

3. Hybridantrieb nach einem der Ansprüche 1 oder 2, **dadurch gekennzeichnet, dass** die Kupplung (13,20,21) als insbesondere nasse Lamellenkupplung ausgebildet ist.

4. Hybridantrieb nach einem der Ansprüche 1 bis 3, **dadurch gekennzeichnet, dass** die Bremse (14) als insbesondere nasse Lamellenbremse ausgebildet ist.

5. Hybridantrieb nach einem der Ansprüche 1 bis 4, **gekennzeichnet durch** ein auf der Antriebswelle (10) des Elektromotors (7) angeordnetes mit dem Hohlrad . (16) des Planetengetriebes (6) im Eingriff stehendes Antriebselement.

6. Hybridantrieb nach einem der Ansprüche 1 bis 5, **dadurch gekennzeichnet, dass** zwischen der Antriebswelle (10) des Elektromotors (7) und dem Planetengetriebe (6) mindestens eine weitere Kupplung (20,21) vorgesehen ist.

7. Verfahren zur Steuerung eines Getriebes für einen Hybridantrieb beinhaltend mindestens zwei Motoren (2,7), die über eine Kupplung (11) miteinander verbindbar sind und mindestens ein, mindestens eine Abtriebswelle (15) beinhaltendes Planetengetriebe (6), dessen Hohlrad (16) über mindestens eine Bremse (14) festsetzbar ist, indem die Motoren (2,7) in einem ersten Fahrbereich Drehmoment addierend zusammengeschaltet werden und einer der Motoren (2,7) dergestalt über mindestens eine weitere Kupplung (13,20,21) umgeschaltet wird, dass die Motoren (2,7) in einem weiteren Fahrbereich Drehzahl addierend betrieben werden, wobei im zeitlichen Verlauf der Schaltung der Kupplung (13,20,21) die Bremse (14) gelöst wird.

8. Verfahren nach Anspruch 7, **dadurch gekennzeichnet, dass** der Hybridantrieb durch eine als Motormanagement wirkende Elektronik angesteuert wird, dergestalt, dass über Wahlschalter der Hybridantrieb verbrauchsoptimiert betrieben wird.

9. Verfahren nach Anspruch 7, **dadurch gekennzeichnet, dass** der Hybridantrieb durch eine als Motormanagement wirkende Elektronik angesteuert wird, dergestalt, dass über Wahlschalter der Hybridantrieb im Betriebszustand des maximalen Beschleunigungsvermögens betrieben wird.

## Claims

1. A hybrid drive for vehicles, at least comprising a main motor (2), in particular an internal combustion engine, a generator (3), an electric motor (7) and a planetary gear (6) comprising a sun wheel (17), a hollow wheel (16), a planetary carrier (19) as well as planetary wheels (18), which planetary gear at least comprises one output shaft (15), wherein for a first speed range of the vehicle the drive shafts (9, 10) of the main motor (2) and the electric motor (7) are coupled on the sun wheel (17) of the planetary gear (6) for adding the torques and for another speed range one of the two motors (2, 7) can be coupled in a non-positive manner on the hollow wheel (16) of the planetary gear (6) according to the principle of interaction for mechanically adding the rotational speeds, wherein the hollow wheel (16) of the planetary gear (6) can be fixed via at least one brake (14) for the first speed range.

2. A hybrid drive according to claim 1, **characterized in that** in the time history of the connecting operation of at least one other clutch (13, 20, 21) for generating another speed range the brake (14) is released.

3. A hybrid drive according to one of the claims 1 or 2, **characterized in that** the clutch (13, 20, 21) is in particular a wet multi-plate clutch.

4. A hybrid drive according to one of the claims 1 through 3, **characterized in that** the brake (14) is in particular a wet multi-disc brake.

5. A hybrid drive according to one of the claims 1 through 4, **characterized by** a drive element placed on the drive shaft (10) of the electric motor (7) and being in mesh with the hollow wheel (16) of the planetary gear (6).

6. A hybrid drive according to one of the claims 1 through 5, **characterized in that** at least one other clutch (20, 21) is provided between the drive shaft (10) of the electric motor (7) and the planetary gear (6).

7. A method for controlling a gear of a hybrid drive comprising at least two motors (2, 7) which can be connected to each other via a clutch (11) and at least one planetary gear (6) comprising at least one drive shaft (15), wherein the hollow wheel (16) of the planetary gear (6) can be fixed via at least one brake (14), in that the motors (2, 7) are interconnected in a torque adding manner in a first speed range and one of the motors (2, 7) is connected via at least one other clutch (13, 20, 21) such that the motors (2, 7) will be operated in a torque adding manner in another speed range, wherein in the time history of the connection of the clutch (13, 20, 21) the brake (14) will be released.

8. A method according to claim 7, **characterized in that** the hybrid drive is triggered by means of an electronics acting as motor management, such that the hybrid drive is operated in a consumption optimized manner via selector switches.

9. A method according to claim 7, **characterized in that** the hybrid drive is triggered by means of an electronics acting as motor management, such that the hybrid drive is operated in the operational status of maximum accelerating power via selector switches.

## Revendications

1. Système hybride de propulsion pour des véhicules, comprenant au moins un moteur principal (2), notamment un moteur à combustion interne, un générateur (3), un moteur électrique (7) et un engrenage planétaire comprenant une roue solaire (17), une couronne de train planétaire (16), un cage de transmission planétaire (19) ainsi que des roues planétaires (18), lequel engrenage planétaire comprend au moins un arbre de sortie (15), dans lequel pour un premier régime de vitesse du véhicule les arbres de transmission (9, 10) du moteur principal (2) et du moteur électrique (7) sont accouplés sur la roue solaire (17) de l'engrenage planétaire (6) pour additionner les couples de rotation et pour un autre régime de vitesse l'un des deux moteurs (2, 7) peut être accouplé par adhérence sur la couronne de train planétaire (16) de l'engrenage planétaire (6) selon le principe de superposition pour l'addition mécanique des vitesses de rotation, la couronne de train planétaire (16) de l'engrenage planétaire (6) étant susceptible d'être fixée par au moins un frein (14) pour le premier régime de vitesse.

2. Système hybride de propulsion selon la revendication 1, **caractérisé en ce que** pendant la variation temporelle de l'opération d'embrayage d'au moins un autre embrayage (13, 20, 21) pour générer un autre régime de vitesse on desserre le frein (14).

3. Système hybride de propulsion selon la revendication 1 ou 2, **caractérisé en ce que** l'embrayage (13, 20, 21) est notamment un embrayage à disques humides.

4. Système hybride de propulsion selon l'une des revendications 1 à 3, **caractérisé en ce que** le frein (14) est notamment un frein à disques multiples humides.

5. Système hybride de propulsion selon l'une des revendications 1 à 4, **caractérisé par** un élément moteur disposé sur l'arbre de transmission (10) du moteur électrique (7) et engrenant la couronne de train planétaire (16) de l'engrenage planétaire.

6. Système hybride de propulsion selon l'une des revendications 1 à 5, **caractérisé en ce qu'**au moins un autre embrayage (20, 21) est prévu entre l'arbre de transmission (10) du moteur électrique (7) et l'engrenage planétaire (6).

7. Procédé pour commander une boîte de vitesse pour un système hybride de propulsion comprenant au moins deux moteurs (2, 7) susceptibles d'être reliés l'un à l'autre par un embrayage (11) et au moins un engrenage planétaire (6) comprenant au moins un arbre de sortie (15), dans lequel la couronne de train planétaire (16) de l'engrenage planétaire (6) est susceptible d'être fixée par au moins un frein (14) en interconnectant les moteurs (2, 7) de manière à additionner des couples de vitesse dans un premier régime de vitesse et en embrayant l'un des moteurs (2, 7) via au moins un autre embrayage (13, 20, 21), de sorte que les moteurs (2, 7) sont opérés de manière à additionner des vitesses de rotation dans un autre régime de vitesse, le frein (14) étant desserré pendant la variation temporelle de l'opération d'embrayage de l'embrayage (13, 20, 21).

8. Procédé selon la revendication 7, **caractérisé en ce que** le système hybride de propulsion est déclenché par une électronique agissant en tant que management de moteur, de sorte que le système hybride de propulsion est opéré de manière à optimiser la consommation via des commutateurs sélectifs.

9. Procédé selon la revendication 7, **caractérisé en ce que** le système hybride de propulsion est déclenché par une électronique agissant en tant que management de moteur, de sorte que le système hybride de propulsion est opéré dans le régime du pouvoir d'accélération maximum via des commutateurs sélectifs.
